# EUROPÄISCHE PATENTSCHRIFT

(11) **EP 4 332 522 B1**
(45) Veröffentlichungstag und Bekanntmachung des Hinweises auf die Patenterteilung: **26.02.2025**
(21) Anmeldenummer: 23191878.0
(22) Anmeldetag: 17.08.2023
(51) Int. Cl.: G01G 19/04

(54) **VERFAHREN ZUM BESTIMMEN EINES LASTFEHLERKORREKTURFAKTORS UND VERFAHREN ZUM AUSFÜHREN EINER LASTKORREKTUR FÜR EIN SCHIENENFAHRZEUG**
METHOD FOR DETERMINING A LOAD ERROR CORRECTION FACTOR AND METHOD FOR CARRYING OUT A LOAD CORRECTION FOR A RAIL VEHICLE
PROCÉDÉ DE DÉTERMINATION D'UN FACTEUR DE CORRECTION D'ERREUR DE CHARGE ET PROCÉDÉ DE MISE EN OEUVRE D'UNE CORRECTION DE CHARGE POUR UN VÉHICULE FERROVIAIRE

(30) Priorität: 26.08.2022 DE 102022208866
(43) Veröffentlichungstag der Anmeldung: 06.03.2024
(73) Patentinhaber: Siemens Mobility GmbH, 81739 München (DE)
(72) Erfinder: Love, David, 91315 Höchstadt (DE); Pfister, Maximilian, 91058 Erlangen (DE); Schneider, Harald, 1100 Wien (AT); Tosunbegovic, Semir, 91058 Erlangen (DE)
(74) Vertreter: Siemens Patent Attorneys

(56) Entgegenhaltungen:
- US-A1- 2013 238 298

## Beschreibung

Die Erfindung betrifft ein Verfahren zum Bestimmen eines Lastfehlerkorrekturfaktors für ein Schienenfahrzeug und ein Verfahren zum Ausführen einer Lastkorrektur mit Lastfehlerkorrekturfaktor für ein Schienenfahrzeug.

Schienenfahrzeuge sind in der Regel mit Lasterfassungssystemen ausgestattet, mittels denen eine Masse des jeweiligen Schienenfahrzeugs während des Betriebs bestimmbar ist. Die Kenntnis der Masse des Schienenfahrzeugs ist insbesondere wichtig für die Optimierung von Brems- und Antriebskräften, die jeweils eine direkte Abhängigkeit zu der Masse des Schienenfahrzeugs aufweisen. Die Optimierung der Brems- bzw. Antriebskräfte erfolgt über eine Lastkorrektur, in der die jeweilige Masse des Schienenfahrzeugs beim Berechnen der optimalen Brems- und Antriebskraft berücksichtigt wird. Herkömmliche Lasterfassungssysteme und Lastkorrekturen arbeiten je nach Ausführung und Anwendungsfall ggfs. nicht ausreichend genau.

Dokument US 2013/238298 A1 offenbart eine Vorrichtung zur Schätzung der Masse und des Schienengefälles eines jeden Schienenfahrzeugs einer Vielzahl von Schienenfahrzeugen in einem Zugsystem.

Der Erfindung liegt die Aufgabe zugrunde, ein verbessertes Verfahren zum Bestimmen eines Lastfehlerkorrekturfaktors für ein Schienenfahrzeug und ein verbessertes Verfahren zum Ausführen einer Lastkorrektur mit Lastfehlerkorrekturfaktor für ein Schienenfahrzeug bereitzustellen.

Diese Aufgabe wird durch das Verfahren zum Bestimmen eines Lastfehlerkorrekturfaktors für ein Schienenfahrzeug und das Verfahren zum Ausführen einer Lastkorrektur mit Lastfehlerkorrekturfaktor für ein Schienenfahrzeug der unabhängigen Ansprüche gelöst. Vorteilhafte Ausgestaltungen sind Gegenstand der Unteransprüche.

Nach einem Aspekt der Erfindung wird ein Verfahren zum Bestimmen eines Lastfehlerkorrekturfaktors für ein Schienenfahrzeug bereitgestellt, wobei das Verfahren umfasst: Empfangen von Lastdruckwerten einer Lastdrucksensorik des Schienenfahrzeugs;
Ermitteln eines ersten Ist-Massewert des Schienenfahrzeugs basierend auf den Lastdruckwerten der Lastdrucksensorik des Schienenfahrzeugs;
Empfangen von Beschleunigungswerten eines Beschleunigungsvorgangs und Empfangen von Kraftwerten eines Antriebs des Schienenfahrzeugs;
Bestimmen eines zweiten Ist-Massewerts des Schienenfahrzeugs basierend auf den Beschleunigungswerten und den Kraftwerten des; und
Ermitteln des Lastfehlerkorrekturfaktors basierend auf einem Verhältnis zwischen dem ersten Ist-Massewert und dem zweiten Ist-Massewert.

Hierdurch kann der technische Vorteil erreicht werden, dass ein verbessertes Verfahren zum Bestimmen eines Lastfehlerkorrekturfaktors für ein Schienenfahrzeug bereitgestellt werden kann. Das Verfahren sieht hierbei vor, einen Ist-Massewert des Schienenfahrzeugs jeweils über zwei verschiedene Messverfahren zu bestimmen. Zum einen wird ein erster Ist-Massewert basierend auf Lastdruckwerten einer Lastdrucksensorik des Schienenfahrzeugs ermittelt. Zum anderen wird zusätzlich ein zweiter Ist-Massewert basierend auf Beschleunigungswerten und Kraftwerten des Schienenfahrzeugs bzw. des Antriebs des Schienenfahrzeugs während eines Beschleunigungsprozesses ermittelt. Basierend auf den ersten und zweiten Ist-Massewerten wird darauffolgend ein Lastfehlerkorrekturfaktor in Form eines Verhältnisses zwischen den beiden ersten und beiden Ist-Massewerten berechnet.

Das Verhältnis zwischen den ersten und zweiten Ist-Massewerten kann hierbei eine Differenz der beiden Ist-Massewerte umfassen. Alternativ kann das Verhältnis ein Zahlenverhältnis in Form eines Zahlenbruchs der beiden Massewerte umfassen. Die Differenz und/oder das Zahlenverhältnis der beiden Massewerte kann hierbei in beliebiger Reihenfolge der beiden Massewerte erfolgen, in denen der erste Ist-Massewert vom zweiten Ist-Massewert oder der zweite Ist-Massewert vom ersten Ist-Massewert abgezogen wird. Analog können der erste Ist-Massewert oder der zweite Ist-Massewert jeweils im Zähler oder Nenner des Zahlenbruchs angeordnet sein.

Die Kraftwerte des Antriebs beschreiben hierbei eine zum Beschleunigen des Schienenfahrzeugs benötigte Kraft des Antriebs. Die Kraftwerte können sich hierbei auf ein Drehmoment des Motors, ein Drehmoment der Radelemente des Schienenfahrzeugs oder auf eine Traktionskraft des Schienenfahrzeugs beziehen. Die Beschleunigungswerte beschreiben ferner Werte der durch das Schienenfahrzeug ausgeführten Beschleunigung. Mittels der Formel *F=m·a,* bei der F die eingesetzte Kraft zum Beschleunigen des Schienenfahrzeugs, a die Beschleunigungswerte des Schienenfahrzeugs und m den Ist-Massewert des Schienenfahrzeugs beschreiben, kann basierend auf der gemessenen Beschleunigung des Schienenfahrzeugs und der zum Erreichen der gemessenen Beschleunigung eingesetzten Kraft des Antriebs der zweite Ist-Massewert berechnet werden. Zur Bestimmung der Beschleunigung können auf Fahrwiderstände des Schienenfahrzeugs berücksichtigt werden. Diese können beispielsweise Rollwiderstände oder Steigungen und Gefälle des befahrenen Gleisabschnitts umfassen.

Durch die Berücksichtigung des zweiten Ist-Massewerts kann die Ungenauigkeit der Massenbestimmung basierend auf der Lastdrucksensorik berücksichtigt bzw. in Form des jeweils berechneten Lastfehlerkorrekturfaktors korrigiert werden. Das beschriebene Verfahren ermöglicht somit die Ermittlung eines präzisen Lastfehlerkorrekturfaktors, mit dem Ungenauigkeiten der Massenbestimmung mittels den Lastdruckwerten der Drucksensorik korrigiert werden können.

Nach einer Ausführungsform umfasst der Beschleunigungsprozess eine konstante Beschleunigung des Schienenfahrzeugs.

Hierdurch kann der technische Vorteil erreicht werden, dass durch die konstante Beschleunigung eine präzisere Ermittlung des zweiten Ist-Massewerts und darauf basierend eine genauere Ermittlung des Lastfehlerkorrekturfaktors möglich ist.

Nach einer Ausführungsform basieren die Beschleunigungswerte auf Messwerten einer Beschleunigungssensorik.

Hierdurch kann der technische Vorteil erreicht werden, dass über die Messwerte der Beschleunigungssensorik präzise Beschleunigungswerte ermittelt werden können.

Nach einer Ausführungsform werden die Beschleunigungswerte basierend auf Geschwindigkeitswerten des Schienenfahrzeugs berechnet.

Hierdurch kann der technische Vorteil erreicht werden, dass basierend auf den gemessenen Geschwindigkeitswerten des Schienenfahrzeugs einfach entsprechende Beschleunigungswerte berechnet werden können. Zusätzliche Beschleunigungssensoriken sind somit nicht notwendig.

Nach einer Ausführungsform werden die Beschleunigungswerte über einen vorbestimmten Zeitraum empfangen, wobei zum Berechnen des zweiten Ist-Massewert ein Mittelwert der Beschleunigungswerte verwendet wird.

Hierdurch kann der technische Vorteil erreicht werden, dass über den berechneten Mittelwert der Mehrzahl von Beschleunigungswerten Schwankungen innerhalb der Beschleunigung des Schienenfahrzeugs korrigiert bzw. mit einer geringeren Auswirkung in die Berechnung des zweiten Ist-Massewerts und damit verbunden in die Berechnung des Lastfehlerkorrekturfaktors einfließen. Über die Mittelwertbildung sind aussagekräftige Beschleunigungswerte bereitstellbar.

Nach einer Ausführungsform werden die Lastdruckwerte der Lastdrucksensorik für eine Mehrzahl von Traktionseinheiten des Schienenfahrzeugs empfangen, wobei für jede Traktionseinheit ein erster Teilmassewert ermittelt wird, und wobei der erste Massewert des Schienenfahrzeugs auf einer Summe der Mehrzahl von Teilmassewerten der Traktionseinheiten basiert.

Hierdurch kann der technische Vorteil erreicht werden, dass ein präziser erste Ist-Massewert des Schienenfahrzeugs mit einer Mehrzahl von Traktionseinheiten bereitgestellt werden kann. Hierbei werden für die einzelnen Traktionseinheiten gesondert erste Ist-Teilmassewerte berechnet, die jeweils die Ist-Masse der jeweiligen Traktionseinheit beschreiben. Der erste Ist-Massewert des Schienenfahrzeugs stellt sich hierbei in der Summe der Mehrzahl von ersten Ist-Teilmassewerten dar. Indem die Ist-Massen der einzelnen Traktionseinheiten separat berechnet werden, kann ein präziser erster Ist-Massewert des gesamten Schienenfahrzeugs ermittelt werden. Für eine besonders präzise Berechnung der Ist-Masse des Schienenfahrzeugs werden bevorzugt für alle Traktionseinheiten entsprechende Ist-Massen berechnet.

Im Sinne der Anmeldung ist eine Traktionseinheit eine Einheit eines Triebfahrzeugs des Schienenfahrzeugs, die unabhängig von weiteren für die Traktion zuständigen Einheiten arbeiten kann. Die Traktionseinheit kann beispielsweise als eine führende Traktionseinheit, die an der Spitze des jeweiligen Schienenfahrzeugs oder als eine geführte Traktionseinheit, die am jeweiligen anderen Ende des Schienenfahrzeugs angeordnet ist, ausgebildet sein. Eine Traktionseinheit ist erfindungsgemäß eine zusammengehörige Antriebseinheit, die Antriebmäßig unabhängig von anderen Traktionseinheiten bzgl. des Antriebs betrieben/gesteuert/geregelt werden kann.

Je nach Ausführung des Zug-/Fahrzeugkonzepts des Schienenfahrzeugs kann diese wagenweit, drehgestellweit, achsweit oder auch über mehrere Wagen gehen. Die Traktionseinheit kann also anwendungsspezifisch flexibel ausgelegt werden. Die Fahrzeugkonzepte sind für gewöhnlich so ausgelegt, dass bei Ausfall einer Traktionseinheit mit den verbleibenden Traktionseinheiten der Betrieb weiter gewährleistet werden kann.

Nach einer Ausführungsform werden Beschleunigungswerte und/oder Kraftwerte für eine Mehrzahl von Traktionseinheiten des Schienenfahrzeugs empfangen, wobei für jede Traktionseinheit ein zweiter Teilmassewert ermittelt wird, und wobei der zweite Massewert des Schienenfahrzeugs auf einer Summe der Mehrzahl von zweiten Teilmassewerten der Traktionseinheiten basiert.

Hierdurch kann der technische Vorteil erreicht werden, dass ein präziser zweiter Massewert des Schienenfahrzeugs bereitgestellt werden kann. Hierzu werden Beschleunigungswerte und/oder Kraftwerte separat für die Mehrzahl von Traktionseinheiten ermittelt und basierend auf diesen jeweilige zweite Teilmassewerte berechnet, die jeweils die Ist-Massen der einzelnen Traktionseinheiten beschreiben. Der gesamte zweite Ist-Massewert des Schienenfahrzeugs wird hierbei wiederum durch eine Summe der Mehrzahl von zweiten Teilmassewerten der einzelnen Traktionseinheiten berechnet. Die Bestimmung der Beschleunigungswerte bzw. Kraftwerte für die einzelnen Traktionseinheiten ermöglicht eine präzisere Ermittlung des zweiten Ist-Massewerts des Schienenfahrzeugs, da verschiedene Abweichungen der einzelnen Messungen aufgrund der Mehrzahl von Messwerten der einzelnen Traktionseinheiten einen geringeren Einfluss auf die Bestimmung des zweiten Ist-Massewerts des gesamten Schienenfahrzeugs haben. Vorzugsweise werden für alle Traktionseinheiten des Schienenfahrzeugs Beschleunigungswerte und/oder Kraftwerte berechnet.

Nach einer Ausführungsform wird das Verfahren zyklisch ausgeführt, wobei die zyklisch ermittelten Lastfehlerkorrekturfaktoren gespeichert werden, und wobei ein mittlerer Lastfehlerkorrekturwert basierend auf den gespeicherten Lastfehlerkorrekturwerten zeitlich früher ausgeführter Ausführungszyklen berechnet wird.

Hierdurch kann der technische Vorteil erreicht werden, dass durch die zyklische Ausführung des Verfahrens und das zyklische Ermitteln des Lastfehlerkorrekturfaktors eine ständige Anpassung und Verbesserung des Lastfehlerkorrekturfaktors während des Betriebs des Schienenfahrzeugs ermöglicht ist. Dies erlaubt die Berücksichtigung von sich verändernden Umgebungsbedingungen und eine wesentlich präzisere Lastfehlerkorrektur, als dies bei einer einmaligen Ermittlung des Lastfehlerkorrekturfaktors möglich wäre. Durch die Berücksichtigung der zwischengespeicherten Lastfehlerkorrekturfaktoren zeitlich früher ausgeführter Ausführungszyklen und die Berechnung eines mittleren Lastfehlerkorrekturfaktors verringert durch die Mittelwertbildung den Einfluss von fehlerhaften bzw. schlechten Messungen und Berechnungen des Lastfehlerkorrekturfaktors. Der mittlere Lastfehlerkorrekturfaktor beschreibt somit eine repräsentative Größe, die für einen ausgedehnten Zeitraum und eine Mehrzahl aufeinanderfolgender Ausführungszyklen den tatsächlichen Lastfehlerkorrekturfaktor präziser repräsentiert. Dies ermöglicht eine präzise Lastfehlerkorrektur.

Nach einer Ausführungsform wird das Verfahren in vorbestimmten Zeitabständen oder bei jedem konstanten Beschleunigungsprozess des Schienenfahrzeugs oder bei jedem Anfahrprozess des Schienenfahrzeugs ausgeführt.

Hierdurch kann der technische Vorteil erreicht werden, dass eine ständige Verbesserung des Lastfehlerkorrekturfaktors ermöglicht ist.

Nach einer Ausführungsform werden beim Bestimmen des zweiten Ist-Massewerts basierend auf den Beschleunigungswerten und den Kraftwerten Karteninformationen einer vom Schienenfahrzeug befahrenen Bahnstrecke (Streckenatlas) berücksichtigt, wobei die berücksichtigten Karteninformationen Steigungsinformationen bezüglich einer Steigung und/oder Gefälleinformationen bezüglich eines Gefälles des Schienenwegs umfassen.

Hierdurch kann der technische Vorteil erreicht werden, dass durch die Berücksichtigung der Karteninformation der Kartendarstellung Steigungsinformationen bezüglich Steigungen bzw. Gefälleinformationen bezüglich Gefälle des gefahrenen Schienenwegs bei der Berechnung des zweiten Ist-Massewerts berücksichtigt werden können. Dies ermöglicht eine wesentlich präzisere Berechnung des zweiten Ist-Massewerts, da sowohl die Steigung als auch das Gefälle des befahrenen Schienenwegs Einfluss auf die für einen Beschleunigungswert benötigte Kraft des Antriebs aufweist.

Nach einem weiteren Aspekt wird ein Verfahren zum Ausführen einer Lastkorrektur mit Lastfehlerkorrekturfaktor für ein Schienenfahrzeug bereitgestellt, umfassend:
Ausführen des Verfahrens zum Bestimmen eines Lastfehlerkorrekturfaktors für ein Schienenfahrzeug nach einer der voranstehenden Ausführungsformen und Bestimmen eines Lastfehlerkorrekturfaktors;
Empfangen von Lastdruckwerten der Lastdrucksensorik des Schienenfahrzeugs;
Ermitteln eines Ist-Massenwerts des Schienenfahrzeugs basierend auf den Messwerten der Lastdrucksensorik;
Berechnen eines korrigierten Ist-Massenwerts durch Beaufschlagen des ermittelten Ist-Massenwerts mit dem Lastfehlerkorrekturfaktor; und
Ausgeben von Steuersignalen zum Ausführen der Lastkorrektur eines Bremssystems des Schienenfahrzeugs basierend auf dem korrigierten Ist-Massenwert.

Hierdurch kann der technische Vorteil erreicht werden, dass ein verbessertes Verfahren zum Ausführen einer Lastkorrektur mit Lastfehlerkorrekturfaktor für ein Schienenfahrzeug bereitgestellt werden kann. Hierzu wird zunächst gemäß dem oben beschriebenen Verfahren zum Bestimmen eines Lastfehlerkorrekturfaktors mit den dort dargestellten technischen Vorteilen ein entsprechender Lastfehlerkorrekturfaktor ermittelt. Basierend auf gemessenen Lastdruckwerten der Lastdrucksensorik wird darauf folgend ein Ist-Massewert des Schienenfahrzeugs berechnet. Unter Berücksichtigung des zuvor berechneten Lastfehlerkorrekturfaktors wird eine Korrektur des über die Lastdruckwerte der Lastdrucksensorik ermittelten Ist-Massewerts durchgeführt und ein korrigierter Ist-Massewert berechnet. Basierend auf dem korrigierten Ist-Massewert werden darauf folgend Steuersignale zum Ausführen einer Lastkorrektur eines Bremssystems bzw. gegebenenfalls eines Antriebssystems des Schienenfahrzeugs ausgegeben. Aufgrund des wie oben beschriebenen berechneten Lastfehlerkorrekturfaktors ist somit ein präziserer korrigierter Ist-Massewert ermittelbar. Dies ermöglicht eine präzisere Lastkorrektur eines Bremsvorgangs bzw. eines Beschleunigungsvorgangs des Schienenfahrzeugs, bei dem mit Berücksichtigung des ermittelten korrigierten Ist-Massewerts eine exakte zum Ausführen des Bremsvorgangs benötigte Bremskraft bzw. eine exakte zum Ausführen des Beschleunigungsvorgangs benötigte Beschleunigungskraft des Schienenfahrzeugs berechnet werden kann. Dies unterstützt einen optimierten Betrieb von Bremse und Antrieb des Schienenfahrzeugs, auch unter Einfluss von unterschiedlichsten Umgebungsbedingungen.

Nach einer Ausführungsform umfasst das Verfahren ferner: Überprüfen, ob der gemessene Lastdruck gültig ist;
Falls der Lastdruck gültig ist, Ermitteln des Ist-Massenwerts des Schienenfahrzeugs basierend auf den Messwerten der Lastdrucksensorik; und
Falls der erfasste Lastdruck ungültig ist:
   Ausgeben einer Störmeldung; und
   Ausgeben von Steuersignalen zum Ausführen der Lastkorrektur des Bremssystems des Schienenfahrzeugs basierend auf einem vorgespeicherten Ersatz-Massenwert.

Hierdurch kann der technische Vorteil erreicht werden, dass durch die Überprüfung der Lastdruckwerte der Lastdrucksensorik eine Lastkorrektur mit einem Ersatzkorrekturwert durchgeführt werden kann, falls die Überprüfung der Lastdruckwerte ergibt, dass diese ungültig sind. Durch die Berücksichtigung des Ersatzwerts bei ungültigen Lastdruckwerten kann somit vermieden werden, dass, basierend auf den ungültigen Lastdruckwerten fehlerhafte Lastfehlerkorrekturfaktoren errechnet und darauf basierend eine fehlerhafte Lastkorrektur durchgeführt wird.

Nach einer Ausführungsform ist der Lastdruck gültig, falls die Lastdrucksensorik fehlerfrei funktioniert und der ermittelte Lastdruckwert innerhalb eines vorbestimmten Arbeitsbereichs angeordnet ist.

Hierdurch kann der technische Vorteil erreicht werden, dass eine präzise Bestimmung der Gültigkeit der Lastdruckwerte ermöglicht ist.

Nach einem weiteren Aspekt wird eine Recheneinheit bereitgestellt, wobei die Recheneinheit ausgebildet ist, das Verfahren zum Bestimmen eines Lastfehlerkorrekturfaktors für ein Schienenfahrzeug nach einer der voranstehenden Ausführungsformen und/oder das Verfahren zum Ausführen einer Lastkorrektur mit Lastfehlerkorrekturfaktor für ein Schienenfahrzeug nach einer der voranstehenden Ausführungsformen auszuführen.

Nach einem weiteren Aspekt wird ein Computerprogrammprodukt umfassend Befehle bereitgestellt, die bei der Ausführung des Programms durch eine Datenverarbeitungseinheit diese veranlassen, das Verfahren zum Bestimmen eines Lastfehlerkorrekturfaktors für ein Schienenfahrzeug nach einer der voranstehenden Ausführungsformen und/oder das Verfahren zum Ausführen einer Lastkorrektur mit Lastfehlerkorrekturfaktor für ein Schienenfahrzeug nach einer der voranstehenden Ausführungsformen auszuführen.

Die oben beschriebenen Merkmale und Vorteile dieser Erfindung sowie die Art und Weise, wie diese erreicht werden, werden klarer und deutlicher verständlich durch die Erläuterungen der folgenden, stark vereinfachten, schematischen Darstellungen bevorzugter Ausführungsbeispiele. Hierbei zeigen jeweils:
- FIG 1: eine schematische Darstellung eines Systems zum Bestimmen eines Lastfehlerkorrekturfaktors für ein Schienenfahrzeug und/oder zum Ausführen einer Lastkorrektur mit Lastfehlerkorrekturfaktor für ein Schienenfahrzeug;
- FIG 2: ein Flussdiagramm eines Verfahrens zum Bestimmen eines Lastfehlerkorrekturfaktors für ein Schienenfahrzeug;
- FIG 3: ein Flussdiagramm eines Verfahrens zum Ausführen einer Lastkorrektur mit Lastfehlerkorrekturfaktor für ein Schienenfahrzeug; und
- FIG 4: eine schematische Darstellung eines Computerprogrammprodukts.

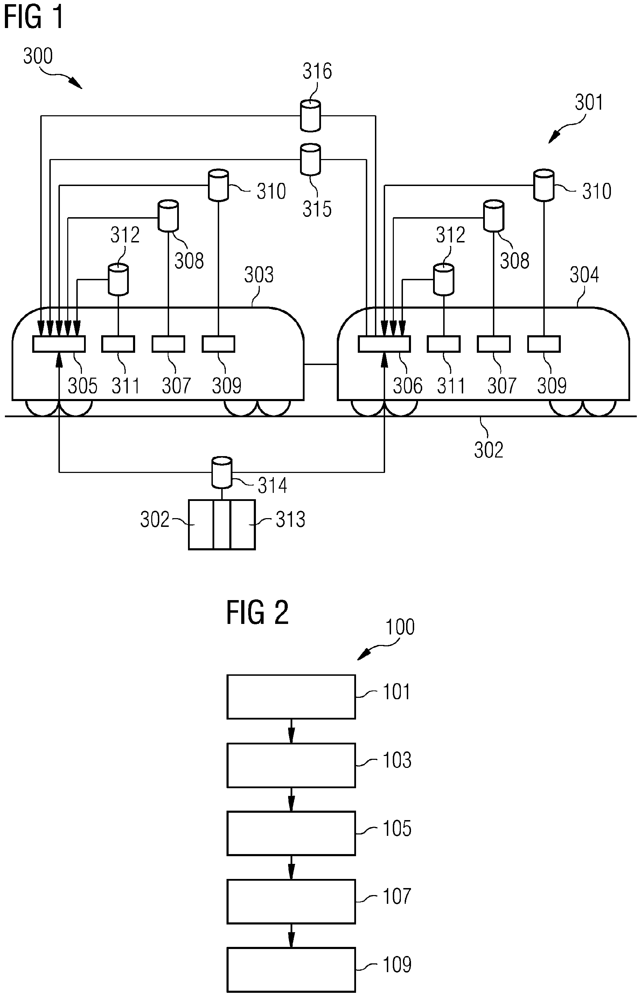

FIG 1 zeigt eine schematische Darstellung eines Systems 300 zum Bestimmen eines Lastfehlerkorrekturfaktors für ein Schienenfahrzeug 301 und/oder zum Ausführen einer Lastkorrektur mit Lastfehlerkorrekturfaktor für ein Schienenfahrzeug 301.

Fig. 1 zeigt ein Schienenfahrzeug 301 mit einer Traktionseinheit 303 und einer weiteren Traktionseinheit 304. Das Schienenfahrzeug befährt einen Schienenweg 302. Die beiden Traktionseinheiten 303, 304 umfassen jeweils eine Recheneinheit 305 bzw. eine weitere Recheneinheit 306 zum Ausführen des erfindungsgemäßen Verfahrens zum Bestimmen eines Lastfehlerkorrekturfaktors für ein Schienenfahrzeug 301 bzw. des erfindungsgemäßen Verfahrens zum Ausführen einer Lastkorrektur mit Lastfehlerkorrekturfaktor. Die Traktionseinheiten 303, 304 umfassen ferner einen Antrieb 307, eine Lastdrucksensorik 309 zum Bestimmen eines Lastdrucks der jeweiligen Traktionseinheit 303, 304 und eine Beschleunigungssensorik 311 zum Ermitteln von Beschleunigungswerten des Schienenfahrzeugs 301.

Zum Bestimmen eines Lastfehlerkorrekturfaktors für das Schienenfahrzeug 301 werden durch die Recheneinheiten 305, 306 zunächst Lastdruckwerte 310 der Lastdrucksensorik 309 empfangen. Die Lastdruckwerte 310 beschreiben hierbei jeweils einen Lastdruck der jeweiligen Traktionseinheit 303, 304. Die Lastdrucksensorik 309 kann beispielsweise über ein Wiegeventil bzw. eine Mehrzahl von Wiegeventilen der Traktionseinheiten 303, 304 ausgebildet sein und eingerichtet sein, den jeweiligen Lastdruck der Traktionseinheit 303, 304 zu ermitteln. Alternativ kann die Lastsensorik Sensoriken zum Messen eines Drucks innerhalb von Luftfedern des Schienenfahrzeugs 301 umfassen.

Basierend auf den Lastdruckwerten der Lastdrucksensoriken 309 der einzelnen Traktionseinheiten 303, 304 werden durch die Recheneinheiten 305, 306 für jede Traktionseinheit 303, 304 jeweils ein erster Teilmassewert 315 berechnet. Der erste Teilmassewert beschreibt hierbei einen Ist-Massewert der jeweiligen Traktionseinheit 303, 304, der basierend auf den jeweiligen Lastdruckwerten der Lastdrucksensorik 309 berechnet wurde.

Basierend auf den Beschleunigungswerten 312, die die Beschleunigung des Schienenfahrzeugs 301 bzw. die Beschleunigung der einzelnen Traktionseinheiten 303, 304 beschreiben und basierend auf den Kraftwerten 308 des Antriebs 307, die jeweils die zum Erreichen der gegebenen Beschleunigung durch den Antrieb 307 aufzuwendenden Kraft beschreiben, werden für jede Traktionseinheit 303, 304 zweite Teilmassewerte des Schienenfahrzeugs 301 berechnet. Die zweiten Teilmassewerte beschreiben hierbei jeweils Ist-Massewerte der einzelnen Traktionseinheiten 303, 304, die unter Berücksichtigung der jeweiligen Beschleunigungswerte 312 bzw. Kraftwerte 308 für die jeweilige Traktionseinheit 303, 304 berechnet wurden.

Die Berechnung der zweiten Teilmassewerte basiert hierbei auf der Formel *F = m·a,* wobei F die zur Erreichung der Beschleunigung benötigten Kraft des Antriebs, m den jeweiligen Ist-Massewert der Traktionseinheit 303, 304 und a den jeweiligen Beschleunigungswert 312 beschreibt.

Für den Fall, dass die gezeigten beiden Traktionseinheiten 303, 304 jeweils gemeinsam den Antrieb bzw. die Antriebsleistung des Schienenfahrzeugs 301 bereitstellen, so sind aufgrund der Kopplung der beiden Traktionseinheiten 303, 304 miteinander die jeweiligen Beschleunigungswerte 312 für beide Traktionseinheiten 303, 304 identisch. Durch den gemeinsamen Antrieb des Schienenfahrzeugs 301 durch die zwei Traktionseinheiten 303, 304 stellt jede der Traktionseinheiten 303, 304 jeweils nur einen Teil der zum Antrieb benötigten Kraft bereit, so dass die Summe der Kraftwerte 308 der beiden Traktionseinheiten 303, 304 die zum Erreichen der jeweiligen Beschleunigung des Schienenfahrzeugs 301 benötigten Kraft bereitstellen. Durch die Berücksichtigung der oben genannten Formel können somit bei Kenntnis der Beschleunigungswerte 312 bzw. Kraftwerte 308 die jeweiligen Ist-Massen der einzelnen Traktionseinheiten 303, 304 berechnet werden.

Zur Ermittlung des ersten Ist-Massewerts des gesamten Schienenfahrzeugs 301 werden durch die einzelnen Traktionseinheiten 303, 304 die jeweiligen ersten Teilmassewerte 315 bereitgestellt. Der erste Ist-Massewert des gesamten Schienenfahrzeugs 301 hierbei durch die Summe der einzelnen ersten Teilmassewerte 315 gebildet. Analog werden durch die Traktionseinheiten 303, 304 zweite Teilmassewerte 316 bereitgestellt, die basierend auf den Beschleunigungswerten 312 bzw. Kraftwerten 308 berechnet wurden. Der zweite Ist-Massewert des gesamten Schienenfahrzeugs 301 berechnet sich ebenfalls durch eine Summenbildung der Mehrzahl von zweiten Teilmassewerten der verschiedenen Traktionseinheiten 303, 304.

Der erste Ist-Massewert des Schienenfahrzeugs 301 beschreibt hierbei eine Ist-Masse des Schienenfahrzeugs 301, die basierend auf den Lastdruckwerten der Lastdrucksensorik 309 berechnet wurden. Der zweite Ist-Massewert des Schienenfahrzeugs 301 beschreibt hingegen eine Ist-Masse, die basierend auf der Beschleunigung des Schienenfahrzeugs 301 und der zum Erreichen der jeweiligen Beschleunigung benötigten Kraft des Antriebs 307 des Schienenfahrzeugs 301 berechnet wurde.

Basierend auf den ersten und zweiten Ist-Massewerten des Schienenfahrzeugs 301 wird ein Lastfehlerkorrekturfaktor berechnet. Der Lastfehlerkorrekturfaktor kann sich beispielsweise in Form eines Verhältnisses aus den ersten und zweiten Ist-Massewerten ergeben. Durch den Lastfehlerkorrekturfaktor kann im Folgenden eine Lastkorrektur für durchzuführende Bremsprozesse bzw. durchzuführende Beschleunigungsprozesse ausgeführt werden.

Gemäß der gezeigten Ausführungsform werden zur Berechnung der zweiten Teilmassewerte 316 basierend auf den Beschleunigungswerten 312 bzw. Kraftwerten 308 der einzelnen Traktionseinheiten 305, 306 Karteninformationen 314 einer den durch das Schienenfahrzeugs 301 befahrenen Schienenweg 302 darstellenden Kartendarstellung 313 berücksichtigt. Die Karteninformationen 314 können hierbei insbesondere Steigungsinformationen bezüglich Steigungen des Schienenwegs 302 bzw. Gefälleinformationen bezüglich Gefälle des Schienenwegs 302 umfassen. Durch die berücksichtigten Steigungen bzw. Gefälle des jeweiligen Schienenwegs 302 kann ein präziserer zweiter Teilmassewert basierend auf den Beschleunigungswerten 312 bzw. Kraftwerten 308 berechnet werden.

Gemäß einer Ausführungsform wird das beschriebene Verfahren zum Bestimmen eines Lastfehlerkorrekturfaktors während einer konstanten Beschleunigung des Schienenfahrzeugs 301 ausgeführt.

Abweichend zu der in Fig. 1 gezeigten Ausführungsform, in der die Beschleunigungswerte 312 auf einer entsprechenden Beschleunigungssensorik 311 basieren, können die Beschleunigungswerte auch unter Berücksichtigung gemessener Geschwindigkeitswerte des Schienenfahrzeugs 301 berechnet werden.

Gemäß einer Ausführungsform werden die Beschleunigungswerte 312 über einen vorbestimmten Zeitraum empfangen bzw. aufgenommen. Der zweite Ist-Massewert bzw. die zweiten Teilmassewerte der Traktionseinheiten 303, 304 werden darauffolgend basierend auf einem Mittelwert der Mehrzahl von Beschleunigungswerten 312, die über den vorbestimmten Zeitraum aufgenommen wurden, ausgeführt.

Die Bestimmung des Lastfehlerkorrekturfaktors gemäß den oben beschriebenen Verfahrensschritten kann gemäß einer Ausführungsform zyklisch ausgeführt werden. Die in einem Ausführungszyklus ermittelten Lastfehlerkorrekturfaktoren können hierbei in einer entsprechenden Speichereinheit gespeichert werden. Ein aktueller Lastfehlerkorrekturfaktor kann demzufolge als ein Mittelwert der in den vorangegangenen Ausführungszyklen berechneten Lastfehlerkorrekturfaktoren berechnet werden.

Gemäß einer Ausführungsform kann das Verfahren zur Bestimmung des Lastfehlerkorrekturfaktors in vorbestimmten Zeitabständen während des Betriebs des Schienenfahrzeugs 301 ausgeführt werden. Insbesondere kann die Bestimmung des Lastfehlerkorrekturfaktors bei Anfahrprozessen des Schienenfahrzeugs 301, in denen eine konstante Beschleunigung zu erwarten ist, ausgeführt werden.

Abweichend zu der gezeigten Ausführungsform kann die Bestimmung des Lastfehlerkorrekturfaktors auch ausschließlich für einzelne Traktionseinheiten 303 ausgeführt werden. Der erste Ist-Massewert ist in diesem Fall durch den jeweils wie oben beschriebenen ersten Teilmassewert 315 gegeben, während der zweite Ist-Massewert durch den jeweils für die Traktionseinheit 303, 304 ermittelten zweiten Teilmassewert 316 gegeben ist.

In der gezeigten Ausführungsform werden die ersten und zweiten Teilmassewerte 315, 316, die für die weitere Traktionseinheiten 304 berechnet wurden, an die Recheneinheit 305 der Traktionseinheit 303 übertragen. Die Recheneinheit 305 ermittelt in der gezeigten Ausführungsform demzufolge die ersten und zweiten Teilmassewerte 315, 316 für die jeweilige Traktionseinheit 303 und berechnet aus diesen in Kombination mit den ersten und zweiten Teilmassewerten 315, 316 der weiteren Traktionseinheit 304 die jeweiligen ersten und zweiten Ist-Massewerte des gesamten Schienenfahrzeugs 301. Ferner berechnet die Recheneinheit 305 hierauf basierend den Lastfehlerkorrekturfaktor für das gesamte Schienenfahrzeug 301.

Abweichend zu der gezeigten Ausführungsform kann das Schienenfahrzeug 301 eine beliebige Anzahl von Traktionseinheiten 303, 304 umfassen.

Nach Berechnung des Lastfehlerkorrekturfaktors gemäß der oben beschriebenen Berechnungsschritten kann durch die Recheneinheit 305, 306 eine Lastkorrektur ausgeführt werden. Hierzu werden während des Betriebs des Schienenfahrzeugs 301 analog zu den oben beschriebenen Schritten Lastdruckwerte der Lastdrucksensorik 309 aufgenommen. Außerdem wird basierend auf den Lastdruckwerten der Lastdrucksensorik ein Ist-Massewert des Schienenfahrzeugs 301 berechnet. Unter Berücksichtigung des zuvor ermittelten Lastfehlerkorrekturfaktors wird der basierend auf den Lastdruckwerten ermittelte Ist-Massewert korrigiert und ein entsprechender korrigierter Ist-Massewert berechnet. Darauffolgend können Steuersignale zum Ausführen der Lastkorrektur, beispielsweise eines Bremssystems oder eines Antriebssystems des Schienenfahrzeugs 301, basierend auf dem korrigierten Ist-Massewert ausgegeben werden. Mit der Lastkorrektur kann hier unter Berücksichtigung des korrigierten Ist-Massewerts, eine für den auszuführenden Bremsvorgang optimierte Bremskraft bzw. für den Beschleunigungsvorgang optimierte Beschleunigungskraft berechnet werden.

Gemäß einer Ausführungsform können die Lastdruckwerte 310 der Lastdrucksensorik 309 auf eine Gültigkeit überprüft werden. Für gültige Lastdruckwerte, die entweder in einem zuvor bestimmten Arbeitsbereich der Lastdrucksensorik angeordnet sind oder für die die jeweilige Lastdrucksensorik 309 fehlerfrei funktioniert, kann die oben beschriebene Korrektur ausgeführt werden. Für ungültige Lastdruckwerte 310, die beispielsweise außerhalb des vorbestimmten Arbeitsbereichs angeordnet sind, kann hingegen eine entsprechende Fehlermeldung ausgegeben werden und ein Ersatzlastdruckwert bereitgestellt werden. Basierend auf dem Ersatzlastdruckwert kann ein entsprechender Ist-Massewert berechnet werden und darauf basierend die Lastkorrektur gemäß den oben beschriebenen Verfahrensschritten ausgeführt werden.

FIG 2 zeigt ein Flussdiagramm eines Verfahrens 100 zum Bestimmen eines Lastfehlerkorrekturfaktors für ein Schienenfahrzeug 301.

Erfindungsgemäß werden in einem ersten Verfahrensschritt 101 zunächst Lastdruckwerte 310 einer Lastdrucksensorik 309 des Schienenfahrzeugs 301 empfangen.

In einem weiteren Verfahrensschritt 103 wird basierend auf den Lastdruckwerten 310 ein erster Ist-Massewert des Schienenfahrzeugs 301 berechnet.

In einem weiteren Verfahrensschritt 305 werden Beschleunigungswerte 312 eines Beschleunigungsvorgangs des Schienenfahrzeugs und Kraftwerte 308 eines Antriebs 307 des Schienenfahrzeugs 301 empfangen.

In einem weiteren Verfahrensschritt 107 wird basierend auf den Beschleunigungswerten 312 und den Kraftwerten 308 ein zweiter Ist-Massewert des Schienenfahrzeugs 301 berechnet.

In einem weiteren Verfahrensschritt 109 wird der Lastfehlerkorrekturfaktor basierend auf dem ersten Ist-Massewert und dem zweiten Ist-Massewert ermittelt. Der Lastfehlerkorrekturfaktor kann beispielsweise durch ein Verhältnis der ersten und zweiten Ist-Massewerte gegeben sein.

Wie oben beschrieben, kann der Beschleunigungsprozess durch eine konstante Beschleunigung kennzeichnend sein. Die Beschleunigungswerte 312 können gemäß einer Ausführungsform Messwerte einer entsprechenden Beschleunigungssensorik 311 sein. Alternativ können die Beschleunigungswerte 312 basierend auf Geschwindigkeitswerten des Schienenfahrzeugs 301 berechnet werden. Gemäß einer weiteren Ausführungsform können die Beschleunigungswerte 312 über einen vorbestimmten Zeitraum empfangen werden. Auf der Mehrzahl von Beschleunigungswerten 312 kann ein Mittelwert der Beschleunigungswerte 312 berechnet werden. Sowohl die Lastdruckwerte 310 der Lastdrucksensorik 309 als auch die Beschleunigungswerte 312 wie auch die Kraftwerte 308 können jeweils für eine Mehrzahl von Traktionseinheiten 303, 304 des Schienenfahrzeugs 301, bevorzugt für alle Traktionseinheiten 303, 304 des Schienenfahrzeugs 300, empfangen werden. Basierend auf den Lastdruckwerten 309 kann für jede Traktionseinheit 303, 304 ein erster Teilmassewert 315 berechnet werden. Basierend auf den Beschleunigungswerten 312 und den Kraftwerten 308 kann für jede Traktionseinheit 303, 304 ein zweiter Teilmassewert 316 ermittelt werden.

Der erste Ist-Massewert des Schienenfahrzeugs 301 ergibt sich hierbei aus einer Summe der ersten Teilmassewerte 315 der verschiedenen Traktionseinheiten 303, 304. Der zweite Ist-Massewert des Schienenfahrzeugs 301 ergibt sich analog aus einer Summe der Mehrzahl von zweiten Teilmassewerten 316 der verschiedenen Traktionseinheiten 303, 304.

Wie oben beschrieben, kann das Verfahren zyklisch ausgeführt werden und es können für die verschiedenen Ausführungszyklen Lastfehlerkorrekturfaktoren ermittelt und gespeichert werden. Basierend auf den Lastfehlerkorrekturfaktoren der verschiedenen Ausführungszyklen kann ein gemittelter Lastfehlerkorrekturfaktor berechnet werden.

Das Verfahren 100 kann hierbei in vorbestimmten Zeitabständen ausgeführt werde. Beispielsweise kann das Verfahren 100 bei jedem konstanten Beschleunigungsprozesses des Schienenfahrzeugs 301 oder bei ausgewählten Beschleunigungsprozessen, beispielsweise bei Anfahrprozessen des Schienenfahrzeugs 301 ausgeführt werden. Gemäß einer Ausführungsform können zur Berechnung des zweiten Ist-Massewerts bzw. der zweiten Teilmassewerte Karteninformationen 314 einer Kartendarstellung 313 berücksichtigt werden. Die Karteninformationen 314 können hierzu insbesondere Steigungsinformationen bezüglich Steigungen und/oder Gefälleinformationen bezüglich Gefälle des durch das Schienenfahrzeug 301 befahrenen Schienenwegs umfassen.

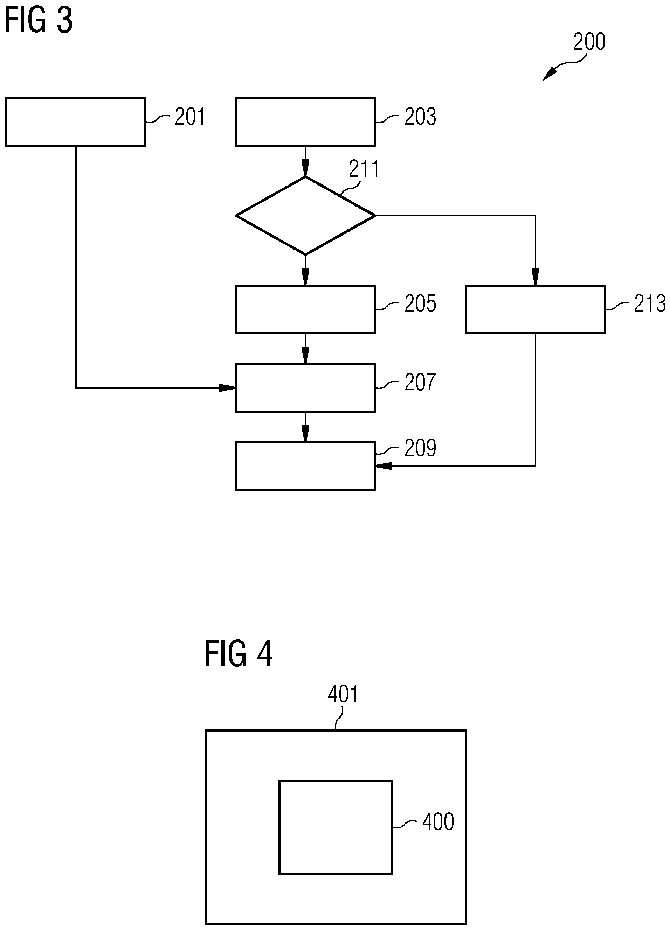

FIG 3 zeigt ein Flussdiagramm eines Verfahrens 200 zum Ausführen einer Lastkorrektur mit Lastfehlerkorrekturfaktor für ein Schienenfahrzeug 301.

Erfindungsgemäß wird in einem Verfahrensschritt 201das Verfahren 100 zum Bestimmen eines Lastfehlerkorrekturfaktors für ein Schienenfahrzeug 301 nach den oben beschriebenen Ausführungsformen ausgeführt und ein entsprechender Lastfehlerkorrekturfaktor bestimmt.

In einem weiteren Verfahrensschritt 203 werden Lastdruckwerte 310 einer Lastdrucksensorik 309 des Schienenfahrzeugs 301 empfangen.

In einem weiteren Verfahrensschritt 211 wird überprüft, ob die gemessenen Lastdruckwerte 310 gültig sind.

In einem weiteren Verfahrensschritt 205 wird basierend auf den gemessenen Lastdruckwerten ein Ist-Massewert des Schienenfahrzeugs 301 berechnet, falls die Lastdruckwerte 310 gültig sind.

In einem weiteren Verfahrensschritt 207 wird unter Berücksichtigung des Lastfehlerkorrekturfaktors eine Korrektur des ermittelten ersten Massewerts des Schienenfahrzeugs 301 ausgeführt und ein korrigierter Ist-Massewert berechnet.

In einem weiteren Verfahrensschritt 209 werden Steuersignale zum Ausführen der Lastkorrektur eines Bremssystems bzw. eines Beschleunigungssystems des Schienenfahrzeugs 301 basierend auf dem korrigierten Ist-Massewert ausgegeben. Die Lastkorrektur umfasst hierbei das Berechnen einer optimalen Bremskraft bzw. einer optimalen Antriebskraft, die zum Ausführen des auszuführenden Bremsvorgangs bzw. Beschleunigungsvorgangs unter Berücksichtigung des korrigierten Ist-Massewerts, der tatsächliche Ist-Masse des Schienenfahrzeugs darstellt, berechnet werden.

Falls die Lastdruckwerte 310 nicht gültig sind, wird in einem weiteren Verfahrensschritt 213 eine entsprechende Störmeldung ausgegeben.

Werden im Verfahrensschritt 209 Steuersignale zum Ausführen der Lastkorrektur des Bremssystems bzw. des Antriebssystems des Schienenfahrzeugs 301 basierend auf einem vorgespeicherten Ersatzmassenwert ausgegeben. Der vorgespeicherte Ersatzmassenwert beschreibt beispielsweise eine gemittelte Ist-Masse des Schienenfahrzeugs. Der Ersatzmassenwert kann beispielsweise lediglich die Masse des leeren Schienenfahrzeugs ohne Beladung sein.

FIG 4 zeigt eine schematische Darstellung eines Computerprogrammprodukts 400, umfassend Befehle, die bei der Ausführung des Programms durch eine Recheneinheit dieses veranlassen, das Verfahren 100 zum Bestimmen eines Lastfehlerkorrekturfaktors für ein Schienenfahrzeug 301 und/oder das Verfahren 200 zum Ausführen einer Lastkorrektur mit Lastfehlerkorrekturfaktor für ein Schienenfahrzeug 301 auszuführen.

Das Computerprogrammprodukt 400 ist in der gezeigten Ausführungsform auf einem Speichermedium 401 gespeichert. Das Speichermedium 401 kann hierbei ein beliebiges aus dem Stand der Technik bekanntes Speichermedium sein.

## Patentansprüche

1. Verfahren (100) zum Bestimmen eines Lastfehlerkorrekturfaktors für ein Schienenfahrzeug (301), umfassend:
Empfangen (101) von Lastdruckwerten (310) einer Lastdrucksensorik (309) des Schienenfahrzeugs (301);
Ermitteln (103) eines ersten Ist-Massewert des Schienenfahrzeugs (301) basierend auf den Lastdruckwerten (310) der Lastdrucksensorik (309) des Schienenfahrzeugs (301);
Empfangen (105) von Beschleunigungswerten (312) eines Beschleunigungsvorgangs und Empfangen von Kraftwerten (308) eines Antriebs (307) des Schienenfahrzeugs (301);
Ermitteln (107) eines zweiten Ist-Massewerts des Schienenfahrzeugs (301) basierend auf den Beschleunigungswerten (312) und den Kraftwerten (308) des Schienenfahrzeugs (301); und
Ermitteln (109) des Lastfehlerkorrekturfaktors basierend auf einem Verhältnis zwischen dem ersten Ist-Massewert und dem zweiten Ist-Massewert.

2. Verfahren (100) nach Anspruch 1, wobei der Beschleunigungsprozess eine konstante Beschleunigung des Schienenfahrzeugs (301) umfasst.

3. Verfahren (100) nach Anspruch 1 oder 2, wobei die Beschleunigungswerte (312) auf Messwerten einer Beschleunigungssensorik (311) basieren.

4. Verfahren (100) nach einem der voranstehenden Ansprüche, wobei die Beschleunigungswerte (312) basierend auf Geschwindigkeitswerten des Schienenfahrzeugs (301) berechnet werden.

5. Verfahren (100) nach einem der voranstehenden Ansprüche,
wobei die Beschleunigungswerte (312) über einen vorbestimmten Zeitraum empfangen werden, und wobei zum Berechnen des zweiten Ist-Massewert ein Mittelwert der Beschleunigungswerte (312) verwendet wird.

6. Verfahren (100) nach einem der voranstehenden Ansprüche,
wobei die Lastdruckwerte (310) der Lastdrucksensorik (309) für eine Mehrzahl von Traktionseinheiten (303, 304) des Schienenfahrzeugs (301) empfangen werden, wobei für jede Traktionseinheit (303, 304) ein erster Teilmassewert (315) ermittelt wird, und wobei der erste Massewert (315) des Schienenfahrzeugs (301) auf einer Summe der Mehrzahl von ersten Teilmassewerten (315) der Traktionseinheiten (303, 304) basiert.

7. Verfahren (100) nach einem der voranstehenden Ansprüche,
wobei Beschleunigungswerte (312) und/oder Kraftwerte (308) für eine Mehrzahl von Traktionseinheiten (303, 304) des Schienenfahrzeugs (301) empfangen werden, wobei für jede Traktionseinheit (303, 304) ein zweiter Teilmassewert (316) ermittelt wird, und wobei der zweite Massewert des Schienenfahrzeugs (301) auf einer Summe der Mehrzahl von zweiten Teilmassewerten (316) der Traktionseinheiten (303, 304) basiert.

8. Verfahren (100) nach einem der voranstehenden Ansprüche,
wobei das Verfahren (100) zyklisch ausgeführt wird, wobei die zyklisch ermittelten Lastfehlerkorrekturfaktoren gespeichert werden, und wobei ein mittlerer Lastfehlerkorrekturfaktor basierend auf den gespeicherten Lastfehlerkorrekturfaktoren zeitlich früher ausgeführter Ausführungszyklen berechnet wird.

9. Verfahren (100) nach Anspruch 8, wobei das Verfahren (100) in vorbestimmten Zeitabständen oder bei jedem konstanten Beschleunigungsprozess des Schienenfahrzeugs (301) oder bei jedem Anfahrprozess des Schienenfahrzeugs (301) ausgeführt wird.

10. Verfahren (100) nach einem der voranstehenden Ansprüche, wobei beim Bestimmen (107) des zweiten Ist-Massewerts basierend auf den Beschleunigungswerten (312) und den Kraftwerten (308) Karteninformationen (314) eines durch das Schienenfahrzeug (301) befahrenen Schienenwegs (302) darstellenden Kartendarstellung (313) berücksichtigt werden, und wobei die berücksichtigten Karteninformationen (314) Steigungsinformationen bezüglich einer Steigung und/oder Gefälleinformationen bezüglich eines Gefälles des Schienenwegs (302) umfassen.

11. Verfahren (200) zum Ausführen einer Lastkorrektur mit Lastfehlerkorrekturfaktor für ein Schienenfahrzeug (301), umfassend:
Ausführen (201) des Verfahrens (100) zum Bestimmen eines Lastfehlerkorrekturfaktors für ein Schienenfahrzeug (301) nach einem der voranstehenden Ansprüche 1 bis 10 und Bestimmen eines Lastfehlerkorrekturfaktors;
Empfangen (203) von Lastdruckwerten (310) der Lastdrucksensorik (309) des Schienenfahrzeugs (301);
Ermitteln (205) eines Ist-Massenwerts des Schienenfahrzeugs basierend auf den Messwerten der Lastdrucksensorik;
Berechnen (207) eines korrigierten Ist-Massenwerts durch Beaufschlagen des ermittelten Ist-Massenwerts mit dem Lastfehlerkorrekturfaktor; und
Ausgeben (209) von Steuersignalen zum Ausführen der Lastkorrektur eines Bremssystems und/oder eines Antriebssystems des Schienenfahrzeugs (301) basierend auf dem korrigierten Ist-Massenwert.

12. Verfahren (200) nach Anspruch 11, ferner umfassend:
Überprüfen (211), ob die gemessenen Lastdruckwerte (310) gültig sind;
Falls die Lastdruckwerte (310) gültig sind, Ermitteln (205) des Ist-Massenwerts des Schienenfahrzeugs (301) basierend auf den Lastdruckwerten (310) der Lastdrucksensorik (309); und
Falls die erfassten Lastdruckwerte (310) ungültig sind:
Ausgeben (213) einer Störmeldung; und
Ausgeben (209) von Steuersignalen zum Ausführen der Lastkorrektur eines Bremssystems oder eines Antriebssystems des Schienenfahrzeugs (301) basierend auf einem vorgespeicherten Ersatz-Massenwert.

13. Verfahren (200) nach Anspruch 12, wobei die Lastdruckwerte (310) gültig sind, falls die Lastdrucksensorik (309) fehlerfrei funktioniert und die ermittelte Lastdruckwerte (310) innerhalb eines vorbestimmten Arbeitsbereichs angeordnet sind.

14. Recheneinheit (305), wobei die Recheneinheit (305) ausgebildet ist, das Verfahren (100) zum Bestimmen eines Lastfehlerkorrekturfaktors für ein Schienenfahrzeug (301) nach einem der voranstehenden Ansprüche 1 bis 10 und/oder das Verfahren (200) zum Ausführen einer Lastkorrektur mit Lastfehlerkorrekturfaktor für ein Schienenfahrzeug (301) nach einem der voranstehenden Ansprüche 11 bis 13 auszuführen.

15. Computerprogrammprodukt (400) umfassend Befehle, die bei der Ausführung des Programms durch eine Datenverarbeitungseinheit diese veranlassen, das Verfahren (100) zum Bestimmen eines Lastfehlerkorrekturfaktors für ein Schienenfahrzeug (301) nach einem der voranstehenden Ansprüche 1 bis 10 und/oder das Verfahren (200) zum Ausführen einer Lastkorrektur mit Lastfehlerkorrekturfaktor für ein Schienenfahrzeug (301) nach einem der voranstehenden Ansprüche 11 bis 13 auszuführen.

## Claims

1. Method (100) for determining a load error correction factor for a rail vehicle (301), comprising:
receiving (101) load pressure values (310) of a load pressure sensor apparatus (309) of the rail vehicle (301);
ascertaining (103) a first actual mass value of the rail vehicle (301) based on the load pressure values (310) of the load pressure sensor apparatus (309) of the rail vehicle (301);
receiving (105) acceleration values (312) of an acceleration procedure and receiving force values (308) of a drive (307) of the rail vehicle (301);
ascertaining (107) a second actual mass value of the rail vehicle (301) based on the acceleration values (312) and the force values (308) of the rail vehicle (301); and
ascertaining (109) the load error correction factor based on a ratio between the first actual mass value and the second actual mass value.

2. Method (100) according to claim 1, wherein the acceleration process comprises a constant acceleration of the rail vehicle (301).

3. Method (100) according to claim 1 or 2, wherein the acceleration values (312) are based on measurement values of an acceleration sensor apparatus (311).

4. Method (100) according to one of the preceding claims, wherein the acceleration values (312) are calculated on the basis of the speed values of the rail vehicle (301).

5. Method (100) according to one of the preceding claims, wherein the acceleration values (312) are received over a predefined period of time, and wherein an average value of the acceleration values (312) is used for calculating the second actual mass value.

6. Method (100) according to one of the preceding claims, wherein the load pressure values (310) of the load pressure sensor apparatus (309) are received for a plurality of traction units (303, 304) of the rail vehicle (301), wherein a first partial mass value (315) is ascertained for each traction unit (303, 304), and wherein the first mass value (315) of the rail vehicle (301) is based on a sum of the plurality of first partial mass values (315) of the traction units (303, 304).

7. Method (100) according to one of the preceding claims, wherein acceleration values (312) and/or force values (308) are received for a plurality of traction units (303, 304) of the rail vehicle (301), wherein a second partial mass value (316) is ascertained for each traction unit (303, 304), and wherein the second mass value of the rail vehicle (301) is based on a sum of the plurality of second partial mass values (316) of the traction units (303, 304).

8. Method (100) according to one of the preceding claims, wherein the method (100) is carried out cyclically, wherein the cyclically ascertained load error correction factors are stored, and wherein an average load error correction factor is calculated based on the stored load error correction factors of cycles of execution carried out earlier.

9. Method (100) according to claim 8, wherein the method (100) is carried out at predefined intervals or at each constant acceleration process of the rail vehicle (301) or at each start-up process of the rail vehicle (301).

10. Method (100) according to one of the preceding claims, wherein, when the second actual mass value is determined (107) based on the acceleration values (312) and the force values (308), map representation (313) displaying map information (314) of a rail route (302) travelled by the rail vehicle (301) is taken into account, and wherein the map information (314) taken into account includes ascent information relating to an ascent and/or descent information relating to a descent of the rail route (302).

11. Method (200) for carrying out a load correction with load error correction factor for a rail vehicle (301), comprising:
carrying out (201) the method (100) for determining a load error correction factor for a rail vehicle (301) according to one of the preceding claims 1 to 10 and determining a load error correction factor;
receiving (203) load pressure values (310) of the load pressure sensor apparatus (309) of the rail vehicle (301);
ascertaining (205) an actual mass value of the rail vehicle based on the measurement values of the load pressure sensor apparatus;
calculating (207) a corrected actual mass value by applying the ascertained actual mass value to the load error correction factor; and
outputting (209) control signals for carrying out the load correction of a braking system and/or a drive system of the rail vehicle (301) based on the corrected actual mass value.

12. Method (200) according to claim 11, further comprising:
checking (211) whether the measured load pressure values (310) are valid;
if the load pressure values (310) are valid, ascertaining (205) the actual mass value of the rail vehicle (301) based on the load pressure values (310) of the load pressure sensor apparatus (309); and
if the detected load pressure values (310) are invalid:
outputting (213) an error message; and
outputting (209) control signals for carrying out the load correction of a braking system or a drive system of the rail vehicle (301) on the basis of a pre-stored substitute mass value.

13. Method (200) according to claim 12, wherein the load pressure values (310) are valid if the load pressure sensor apparatus (309) functions without errors and the ascertained load pressure values (310) are within a predefined working range.

14. Computing unit (305), wherein the computing unit (305) is designed to carry out the method (100) for determining a load error correction factor for a rail vehicle (301) according to one of the preceding claims 1 to 10 and/or the method (200) for carrying out a load correction with load error correction factor for a rail vehicle (301) according to one of the preceding claims 11 to 13.

15. Computer program product (400) comprising commands which, when the program is executed by a data processing unit, enable the data processing unit to carry out the method (100) for determining a load error correction factor for a rail vehicle (301) according to one of the preceding claims 1 to 10 and/or the method (200) for carrying out a load correction with load error correction factor for a rail vehicle (301) according to one of the preceding claims 11 to 13.

## Revendications

1. Procédé (100) de détermination d'un facteur de correction d'une erreur de charge pour un véhicule (301) ferroviaire, comprenant :
réception (101) de valeurs (310) de la pression de charge d'un ensemble (309) capteur de la pression de charge du véhicule (301) ferroviaire ;
détermination (103) d'une première valeur de masse réelle du véhicule (301) ferroviaire sur la base des valeurs (310) de la pression de charge de l'ensemble (309) capteur de la pression de charge du véhicule (301) ferroviaire ;
réception (105) de valeurs (312) d'accélération d'une opération d'accélération et réception de valeurs (308) de force d'un entraînement (307) du véhicule (301) ferroviaire ;
détermination (107) d'une deuxième valeur de masse réelle du véhicule (301) ferroviaire sur la base des valeurs (312) d'accélération et des valeurs (308) de force du véhicule (301) ferroviaire ; et
détermination (109) du facteur de correction de l'erreur de charge sur la base d'un rapport entre la première valeur de masse réelle et la deuxième valeur de masse réelle.

2. Procédé (100) suivant la revendication 1, dans lequel l'opération d'accélération comprend une accélération constante du véhicule (301) ferroviaire.

3. Procédé (100) suivant la revendication 1 ou 2, dans lequel les valeurs (312) d'accélération reposent sur des valeurs de mesure d'un ensemble (311) capteur d'accélération.

4. Procédé (100) suivant l'une des revendications précédentes, dans lequel on calcule les valeurs (312) d'accélération sur la base de valeurs de vitesse du véhicule (301) ferroviaire.

5. Procédé (100) suivant l'une des revendications précédentes, dans lequel on reçoit les valeurs (312) d'accélération sur un laps de temps déterminé à l'avance, et dans lequel on utilise, pour le calcul de la deuxième valeur de masse réelle, une valeur moyenne des valeurs (312) d'accélération.

6. Procédé (100) suivant l'une des revendications précédentes, dans lequel on reçoit les valeurs (310) de la pression de charge de l'ensemble (309) capteur de la pression de charge pour une pluralité d'unités (303, 304) de traction du véhicule (301) ferroviaire, dans lequel on détermine, pour chaque unité (303, 304) de traction, une première valeur (315) de masse partielle, et dans lequel la première valeur (315) de masse du véhicule (301) ferroviaire repose sur une somme de la pluralité de premières valeurs (315) de masse partielles des unités (303, 304) de traction.

7. Procédé (100) suivant l'une des revendications précédentes, dans lequel on reçoit des valeurs (312) d'accélération et/ou des valeurs (308) de force pour une pluralité d'unités (303, 304) de traction du véhicule (301) ferroviaire, dans lequel on détermine, pour chaque unité (303, 304) de traction, une deuxième valeur (316) de masse partielle, et dans lequel la deuxième valeur de masse du véhicule (301) ferroviaire repose sur une somme de la pluralité de deuxièmes valeurs (316) de masse partielles des unités (303, 304) de traction.

8. Procédé (100) suivant l'une des revendications précédentes, dans lequel on effectue le procédé (100) cycliquement, dans lequel on met en mémoire les facteurs de correction d'une erreur de charge déterminés cycliquement, et dans lequel on calcule un facteur moyen de correction d'une erreur de charge sur la base des facteurs de correction d'une erreur de charge mis en mémoire pendant des cycles effectués auparavant.

9. Procédé (100) suivant la revendication 8, dans lequel on effectue le procédé (100) à des intervalles de temps déterminés à l'avance ou à chaque processus d'accélération constant du véhicule (301) ferroviaire ou à chaque processus de démarrage du véhicule (301) ferroviaire.

10. Procédé (100) suivant l'une des revendications précédentes, dans lequel, lors de la détermination (107) de la deuxième valeur de masse réelle sur la base des valeurs (312) d'accélération et de valeurs (308) de force, on prend en compte des informations (314) cartographiques d'une représentation (313) cartographique représentant un chemin (302) de fer parcouru par le véhicule (301) ferroviaire, et dans lequel les informations (314) cartographiques prises en compte comprennent des informations de montée concernant une montée et/ou des informations de descente concernant une descente du véhicule (302) ferroviaire.

11. Procédé (200) d'exécution d'une correction de charge par un facteur de correction d'une erreur de charge pour un véhicule (301), comprenant :
exécution (201) du procédé (100) de détermination d'un facteur de correction d'une erreur de charge pour un véhicule (301) ferroviaire suivant l'une des revendications 1 à 10 précédentes et détermination d'un facteur de correction d'une erreur de charge ;
réception (203) de valeurs (310) de pression de charge de l'ensemble (309) capteur de la pression de charge du véhicule (301) ferroviaire ;
détermination (205) d'une valeur de masse réelle du véhicule ferroviaire sur la base des valeurs de mesure de l'ensemble capteur de la pression de charge ;
calcul (207), par le facteur de correction de l'erreur de charge, d'une valeur de masse réelle corrigée par intervention de la valeur de masse réelle déterminée ; et
émission (209) de signaux de commande pour l'exécution de la correction de charge d'un système de freinage et/ou d'un système d'entraînement du véhicule (301) sur la base de la valeur de masse réelle corrigée.

12. Procédé (200) suivant la revendication 11, comprenant en outre :
contrôle (211) du point de savoir, si les valeurs (310) mesurées de la pression de charge sont valables ;
si les valeurs (310) de la pression de charge sont valables, détermination (205) de la valeur de masse réelle du véhicule (301) ferroviaire sur la base des valeurs (310) de la pression de charge de l'ensemble (309) capteur de la pression de charge ; et
si les valeurs (310) de la pression de charge détectées ne sont pas valables :
émission (213) d'un message d'anomalie ; et
émission (209) de signaux de commande pour l'exécution de la correction de charge d'un système de freinage ou d'un système d'entraînement du véhicule (301) ferroviaire sur la base d'une valeur de masse de remplacement mise en mémoire préalablement.

13. Procédé (200) suivant la revendication 12, dans lequel les valeurs (310) de la pression de charge sont valables, si l'ensemble (309) capteur de la pression de charge fonctionne sans défaut et si les valeurs (310) déterminées de la pression de charge sont dans une plage de travail déterminée à l'avance.

14. Unité (305) informatique, dans laquelle l'unité (305) informatique est constituée pour exécuter le procédé (100) de détermination d'un facteur de correction d'une erreur de charge pour un véhicule (301) ferroviaire suivant l'une des revendications 1 à 10 précédentes et/ou le procédé (200) d'exécution d'une correction de charge par un facteur de correction d'une erreur de charge pour un véhicule (301) ferroviaire suivant l'une des revendications 11 à 13 précédentes.

15. Produit (400) de programme d'ordinateur, comprenant des instructions qui, lors de l'exécution du programme par une unité de traitement de données, font que celles-ci exécutent le procédé (100) de détermination d'un facteur de correction d'une erreur de charge pour un véhicule (301) ferroviaire suivant l'une des revendications 1 à 10 précédentes et/ou le procédé (200) d'exécution d'une correction de charge par un facteur de correction d'une erreur de charge pour un véhicule (301) ferroviaire suivant l'une des revendications 11 à 13 précédentes.
